# EUROPÄISCHE PATENTANMELDUNG

(11) **EP 1 835 195 A2**
(43) Veröffentlichungstag der Anmeldung: **19.09.2007**
(21) Anmeldenummer: 07003724.7
(22) Anmeldetag: 23.02.2007
(51) Int. Cl.: F16D 48/06

(54) **Verfahren der Steuerung eines elektromotorischen Aktuators einer Kupplung oder eines Getriebes**

(30) Priorität: 16.03.2006 DE 102006012140
(71) Anmelder: LuK Lamellen und Kupplungsbau Beteiligungs KG, 77815 Bühl (DE)
(72) Erfinder: Panzer, Matthias, 77815 Bühl (DE); Eggert, Thomas, 76131 Karlsruhe (DE); Gerhart, Jürgen, 77767 Appenweier (DE)

(57) **Zusammenfassung**

Es handelt sich um ein Verfahren der Steuerung eines elektromotorischen Aktuators einer selbstöffnenden Kupplung im Triebstrang eines Fahrzeugs bei Überlast des Aktuators und/oder einer Aktuatorsteuerung, wobei bei Überlast die Stromzufuhr zum Aktuator unterbrochen wird, wobei der Aktuator vor der Unterbrechung der Stromzufuhr entlang des Aktuatorverfahrwegs zum Erreichen eines Verfahrwegsschwellenwerts betätigt wird, ab dem er stromlos geschalten von einer Rückstellkraft der Kupplung zum Erreichen eines Verfahrwegsendwerts beaufschlagt wird, an dem er wieder zum Schließen der Kupplung betätigbar ist.

## Beschreibung

Die vorliegende Erfindung betrifft ein Verfahren der Steuerung eines elektromotorischen Aktuators einer selbstöffnenden Kupplung im Triebstrang eines Fahrzeugs bei Überlast des Aktuators und/oder einer Aktuatorsteuerung nach dem Oberbegriff des Anspruchs 1. Die Erfindung betrifft darüber hinaus ein Verfahren der Steuerung eines elektromotorischen Aktuators eines Getriebes im Triebstrang eines Fahrzeugs bei Überlast des Aktuators und/oder einer Aktuatorsteuerung nach dem Oberbegriff des Anspruchs 8.

Im Triebstrang eines Fahrzeugs finden sich vermehrt automatisiert betätigte Drehmoment-übertragungseinrichtungen, wie beispielsweise Kupplungen oder Getriebe. Es können dabei auch mehr als eine Kupplung vorgesehen sein, beispielsweise eine als Anfahrelement wirkende Kupplung und eine weitere Kupplung eines Doppelkupplungsgetriebes. Auch bei dem Getriebe sind eine Vielzahl von Ausführungsformen möglich, wie beispielsweise ein automatisiertes Schaltgetriebe, ein Parallelschaltgetriebe, ein Doppelkupplungsgetriebe oder andere Bauformen.

Zur Betätigung dieser Einrichtungen werden oftmals Aktuatoren in der Form von mit einem Getriebe gekoppelter Elektromotoren vorgesehen. Diese Elektromotoren werden mit elektronischen Ansteuerelementen angesteuert, die beispielsweise Steuerungen und Leistungsendstufen umfassen können. Sowohl die Elektromotoren als auch deren Ansteuerelemente können aufgrund verschiedener Betriebssituationen überlastet werden. So kann beispielsweise in einem Aktuator eine Situation erhöhter Reibung durch Verschmutzung auftreten, ein Steuergerät oder dergleichen kann einen Defekt erleiden oder im Elektromotor selbst, der beispielsweise ein EC-Motor sein kann, tritt eine Kurzschlusssituation auf.

Da mit diesen Aktuatoren Vorrichtungen im Triebstrang des Fahrzeugs angesteuert werden, hat eine solche Überlastsituation auch Einfluss auf den aktuellen Betriebsmodus bzw. die Betriebsstellung der als Beispiel zu nennenden Kupplung oder des Getriebes.

Um nun eine sicherheitskritische Situation in Folge einer Überlastsituation eines Aktuators und/oder einer Aktuatorsteuerung zu vermeiden, wird nach Erkennen einer solchen Überlastsituation der Aktuator und/oder die Aktuatorsteuerung stromlos geschalten. Wird nun mit dem Aktuator eine Kupplung im Triebstrang eines Fahrzeugs betätigt, so handelt es sich hier in vorteilhafter Weise um eine selbstöffnende Kupplung, die vom Aktuator zur Drehmomentübertragung aktiv zugedrückt werden muss und die dann nach dem stromlos Schalten des Aktuators und/oder der Aktuatorsteuerung aufgrund ihrer Kupplungskraft für eine Beaufschlagung des Aktuators mit einer Rückstellkraft sorgt, sodass dieser entlang seines Verfahrwegs zurückgedrückt wird und die Kupplung selbsttätig öffnet und damit die Momentenübertragung durch die Kupplung unterbrochen wird.

Wird mit dem vorstehend genannten elektromotorischen Aktuator ein Getriebe im Triebstrang eines Fahrzeugs betätigt, so sind in Abhängigkeit der aktuellen Betriebsstellung des Getriebes, bei dem es sich auch um ein Teilgetriebe eines Doppelkupplungsgetriebes oder dergleichen handeln kann, verschiedene Strategien zur Herbeiführung eines betriebssicheren Zustands möglich.

Je nachdem, in welcher Stellung des Aktuatorverfahrwegs sich der Aktuator bei Auftreten einer Überlastsituation gerade befindet, wirkt von der Kupplung ausgehend eine sich verändernde Rückstellkraft auf den Aktuator. Tritt die vorstehend erwähnte Überlastsituation beispielsweise bei einer vollständig zugedrückten Kupplung auf, so wirkt die Rückstellkraft der Kupplung auf den Aktuator entlang eines langen Verfahrweges, was dazu führt, dass der Aktuator während seiner Rückstellbewegung durch die selbstöffnende Kupplung hohe kinetische Energie erfährt, bis seine Bewegung beispielsweise an einem Endanschlag zum Stillstand kommt, was einerseits zu einer Beschädigung des Aktuators und/oder des Endanschlags führen kann und anderseits auch zu entsprechend groß dimensionierten Bauteilen sowohl am Aktuator als auch am Endanschlag führt, um eine solche bleibende Beschädigung vermeiden zu können. Beides ist sowohl aus Kostengründen als auch aus Gründen der Dynamik des Aktuators von Nachteil, da zur Bewegung der dem Elektromotor nachgeschalteten Bauteilen des Aktuators dann entsprechend groß dimensionierte Elektromotoren notwendig sind, die einerseits den Bauraumbedarf ansteigen lassen und andererseits auch zu einer entsprechenden Kostenzunahme führen.

Anhand der auf die Anmelderin zurückgehenden DE 198 24 772 A1 ist eine Vorrichtung zur Steuerung oder Notbetriebssteuerung eines Einrückzustandes einer automatisiert betätigbaren Kupplung im Antriebsstrang eines Fahrzeugs bekannt geworden, die ein Umschalten in eine Notbetriebssteuerung bei Ausfall oder Defekt oder bei einem unplausiblen Sensorsignal eines Sensors zur Detektion des Einrückzustands der Kupplung vorsieht. Die Notbetriebssteuerung arbeitet dabei zeitgesteuert und die Zeitsteuerung sieht vor, dass die Antriebsleistung als Funktion der Zeit gesteuert wird derart, dass ein bestimmter vorgebbarer Einrückzustand erreicht wird, welcher durch eine zeitabhängige Bestromung von beispielsweise einem Elektromotor erreicht wird.

Mit der aus dieser Druckschrift bekannten Vorrichtung kann daher das Problem nicht gelöst werden, dass eine etwaige bleibende Beschädigung eines Aktuators im Überlastfall durch die Rückstellkraft der selbstöffnenden Kupplung vermieden werden muss. Auch löst diese Druckschrift nicht das Problem, dass bei Auftreten einer Überlastsituation eines Aktuators und/oder einer Aktuatorsteuerung eines damit betätigten Getriebes ein sicherer Zustand hergestellt werden muss.

Die Erfindung schafft nunmehr zur Lösung der vorstehend beschriebenen Aufgabe hinsichtlich des eine selbstöffnende Kupplung betätigenden Aktuators ein Verfahren mit den Merkmalen des Anspruchs 1. Darüber hinaus schafft die Erfindung hinsichtlich des ein Getriebe im Triebstrang eines Fahrzeugs betätigenden Aktuators ein Verfahren mit den Merkmalen des Anspruchs 8. Vorteilhafte Ausgestaltungen des Verfahrens sind in den jeweiligen Unteransprüchen angegeben.

Die Erfindung schafft nun ein Verfahren der Steuerung eines elektromotorischen Aktuators einer selbstöffnenden Kupplung im Triebstrang eines Fahrzeugs bei Überlast des Aktuators und/oder einer Aktuatorsteuerung, wobei bei Überlast die Stromzufuhr zum Aktuator unterbrochen wird und der Aktuator vor der Unterbrechung der Stromzufuhr entlang des Aktuatorverfahrwegs zum Erreichen eines Verfahrwegsschwellenwerts betätigt wird, ab dem er stromlos geschalten von einer Rückstellkraft der Kupplung zum Erreichen eines Verfahrwegsendwerts beaufschlagt wird, an dem er wieder zum Schließen der Kupplung betätigbar ist.

Die Erfindung geht nunmehr von der Erkenntnis aus, dass in Abhängigkeit von der aktuellen Verfahrwegsposition des Aktuators der Aktuator bei Feststellen einer Überlastsituation nicht sofort stromlos geschaltet werden darf, da die durch die Rückstellkraft der Kupplung auf ihn wirkende Beschleunigung entlang des Rückstellverfahrwegs anderenfalls zu einer zu hohen Geschwindigkeit führt, mit der er einen beispielsweise vorhandenen Endanschlag erreicht. Um nun dieses Problem zu beseitigen, wird der Aktuator vor der Unterbrechung der Stromzufuhr entlang des Aktuatorverfahrwegs zum Erreichen eines Verfahrwegschwellenwerts betätigt, ab dem er dann stromlos geschalten werden kann, um von der Rückstellkraft der Kupplung zum Erreichen eines Verfahrwegendwerts beaufschlagt zu werden, an dem er dann wieder zum Schließen der Kupplung betätigt werden kann. Der Verfahrwegendwert kann dabei einer Endanschlagsstellung des Aktuators entlang seines Verfahrwegs entsprechen oder auch einer Stellung vor dem Erreichen dieses Endanschlags, beispielsweise einer Nullposition des Verfahrwegs, an der der Aktuator durch die Beaufschlagung mit der Rückstellkraft der Kupplung nicht mehr weiter in Richtung des Endanschlags betätigt wird, was beispielsweise aufgrund systemimmanenter Reibung im Aktuator der Fall sein kann. Der Verfahrwegschwellenwert entspricht dabei beispielsweise einer sogenannten Aufschnappgrenze eines Wipphebelaktuators oder eines anderen Aktuators, der zur Betätigung einer selbstöffnenden Kupplung mit variabler Betätigungskraft eingesetzt werden kann.

Tritt nun die Überlastsituation auf, wenn sich der Aktuator entlang seines Verfahrwegs beispielsweise zwischen der einer vollständig zugedrückten Stellung der Kupplung entsprechenden Verfahrwegsposition und der vorstehend genannten Aufschnappgrenze befindet, so wird nach der Erfindung zunächst der Aktuator vor der Unterbrechung der Stromzufuhr entlang seines Verfahrwegs bis zum Erreichen des Verfahrwegsschwellenwerts in der Form der Aufschnappgrenze betätigt und nach dem Erreichen dieser Aufschnappgrenze erst stromlos geschalten, sodass ihn die von der Kupplung auf ihn wirkende Rückstellkraft zum Erreichen des vorstehend bereits beschriebenen Verfahrwegsendwerts beaufschlagt, an dem er dann wieder zum Schließen der Kupplung betätigt werden kann. Es kommt daher durch die Rückstellkraft der Kupplung nach dem Auftreten der Überlastsituation nicht zu einer entsprechenden Beschleunigung des Aktuators entlang seines Verfahrwegs bis zu einem Endanschlag, das zu einem Auftreffen des Aktuators am Anschlag mit einer so hohen kinetischen Energie führen könnte, dass sich der Aktuator am Endanschlag beispielsweise verklemmt oder eine andere bleibende Beschädigung erfährt, die dann, um einen Ausfall des Aktuators zu vermeiden, bei der Auslegung des Aktuators wiederum mit entsprechend großzügig und stark dimensionierten Bauteilen vermieden werden müsste.

Wenn der Aktuator beispielsweise eine Kupplung eines Parallelschaltgetriebes betätigt, dann kann es nicht mehr dazu kommen, dass der Aktuator aus seiner aktuellen Position, die er bei Auftreten der Überlastsituation einnimmt ungebremst aufschnappt und somit eine etwaige bleibende Beschädigung erfährt oder ein Verklemmen des Aktuators am Anschlag auftritt.

Es ist dabei nach einer Weiterbildung der Erfindung vorgesehen, dass der Aktuator mit auf vorbestimmte Schwellenwerte begrenzten Werten von Strom und/oder Spannung zum Verfahrwegsschwellenwert verfahren wird derart, dass die Temperatur des Aktuators und/oder der Aktuatorsteuerung im wesentlichen gleich bleibt oder sogar abnimmt. Befindet sich daher der Aktuator zum Zeitpunkt der Feststellung der Überlastsituation jenseits des Verfahrwegsschwellenwerts, so wird er beispielsweise positionsgeregelt mit begrenzter Spannung von beispielsweise 3 Volt oder begrenztem Strom von beispielsweise 5 Ampere Motorstrom auf eine Position entlang seines Verfahrwegs verfahren, die der vorstehend beschriebenen Aufschnappgrenze entspricht und erst danach stromlos geschalten.

Durch diese Begrenzung wird erreicht, dass möglichst wenig Energie in den Elektromotor bzw. die Aktuatorsteuerung eingebracht wird und damit die Temperatur des Aktuators und/oder der Aktuatorsteuerung im wesentlichen gleich bleibt oder aufgrund der Abkühlung über das Gehäuse and die Umgebung sogar noch Kühlung erfährt und damit die Temperatur des Aktuators und/oder der Aktuatorsteuerung abnimmt. Wird dann die Aufschnappgrenze erreicht, so wird nach der vorliegenden Erfindung die Stromzufuhr zum Aktuator sofort unterbrochen, sodass der Aktuator aufgrund der Rückstellkraft der Kupplung weiter verfahren werden kann, bis er entweder den Endanschlag erreicht oder auch bereits vor Erreichen des Endanschlags seine Verfahrbewegung einstellt.

Nach einer Weiterbildung der Erfindung ist es vorgesehen, dass der Aktuator zeitlich unmittelbar nach der Feststellung einer Überlast zum Erreichen des Verfahrwegsschwellenwerts betätigt wird. Es bedeutet dies mit anderen Worten, dass dieser Schwellenwert auf direktem Wege angefahren wird, die Aktion zum Erreichen der gewünschten Position also sofort ausgeführt wird und nicht beispielsweise aufgrund von Komfortgründen die aktuell ausgeführte Strategie zur Ansteuerung der Kupplung noch vorab beendet wird.

Es ist dabei nach der vorliegenden Erfindung vorgesehen, dass der vorstehend genannte Verfahrwegsschwellenwert empirisch festgestellt wird derart, dass die Rückstellkraft den Aktuator beschädigungsfrei zum Erreichen eines Anschlags betätigt, es also aufgrund der Rückstellkraft der Kupplung nicht zum Einbringen kinetischer Energie in den Aktuator in einer solchen Höhe kommt, das dieser mit zu hoher Geschwindigkeit in den Anschlag verfährt.

Auch ist es nach der Erfindung vorgesehen, dass der Verfahrwegsschwellenwert so empirisch festgestellt werden kann, das die Rückstellkraft der Kupplung den Aktuator so beaufschlägt, dass der Aktuator eine Endstellung bereits vor Erreichen eines Anschlags einnimmt, also die Aufschnappgrenze so empirisch ermittelt wird, dass eine weitere Beaufschlagung des Aktuators durch die Rückstellkraft der Kupplung nicht mehr dazu führt, dass der Aktuator seinen Endanschlag erreicht.

Wenn nun der Aktuator auf diese Weise seinen Verfahrwegsschwellenwert erreicht hat, so wird die Stormzufuhr zu ihm sofort unterbrochen und er kann frei von der Rückstellkraft der Kupplung beaufschlagt werden.

Es ist dabei nach der Erfindung vorgesehen, dass der Aktuator positionsgeregelt und/oder kraftgesteuert und/oder spannungsgesteuert zum Verfahrwegsschwellenwert verfahren wird. Der Aktuator kann daher mittels der Aktuatorsteuerung so angesteuert werden, dass er die empirisch ermittelte Aufschnappgrenze positionsgeregelt erreicht. Bei dieser Regelung können dabei die Geschwindigkeit des Verfahrvorgangs, die Kraft sowie die Spannung begrenzt werden, um den Energieeintrag in den Aktuator zu begrenzen.

Wird beispielsweise eine geschwindigkeitsgeregelte Verfahrbewegung durchgeführt, dann kann bei einem beispielsweise vorgesehenen EC-Motor eine bestimmte Drehzahl eingeregelt werden, was durch das nachgeschaltete Getriebe des Elektromotors zu einer Wandlung der rotatorischen in eine translatorische Bewegung mit konstanter Geschwindigkeit führt. Bei der Regelung können die Kraft und die Spannung begrenzt werden. Bei einer kraftgesteuerten Verfahrbewegung kann auf der Basis der auf den Aktuator wirkenden Kraft ein Moment am Elektromotor ermittelt werden, welches eingestellt wird. Bei dieser Regelung können dann die Geschwindigkeit sowie die Spannung begrenzt werden. Wird eine spannungsgesteuerte Verfahrbewegung durchgeführt, so kann am Elektromotor die gewünschte Spannung eingestellt werden und auch auf diese Weise der vorstehend bereits beschriebene Verfahrwegsschwellenwert angefahren werden.

Darüber hinaus kann der Verfahrwegsschwellenwert auch zeitgesteuert angefahren werden, sodass sich die Ansteuerzeit für den Elektromotor, während der er beispielsweise geschwindigkeitsgeregelt mit einer Kraftbegrenzung angesteuert wird, aus dem maximal möglichen Aktuatorverfahrweg, dem Verfahrwegsschwellenwert und der Verfahrgeschwindigkeit ergibt und der Aktuator während dieser Verfahrzeit von der Aktuatorsteuerung geschwindigkeitsgeregelt und kraftgesteuert angesteuert wird.

Um nun eine Überlastsituation erkennen zu können, ist es nach einer Weiterbildung der Erfindung vorgesehen, dass zur Feststellung der Überlast mindestens ein Betriebsparameter des Aktuators und/oder der Aktuatorsteuerung, insbesondere die Temperatur, mit einem Schwellenwert des Betriebsparameters verglichen wird und nach einem Überschreiten des Schwellenwerts Überlast festgestellt wird. Wird nun auf diese Weise eine Überlastsituation ermittelt, so wird der vorstehend bereits beschriebene Vorgang des Verfahrens des Aktuators zu dem beispielsweise empirisch ermittelten Verfahrwegsschwellenwerts eingeleitet.

Da aufgrund des Verfahren des Aktuators bis zum Verfahrwegsschwellenwert und dem erst daraufhin erfolgenden Unterbrechen der Stromzufuhr zum Aktuator der Abschaltvorgang verzögert wird, verglichen mit einer sofortigen Abschaltung des Aktuators nach dem Erkennen der Überlastsituation, ist es nach der Erfindung auch vorgesehen, die Betriebsparameterwerte, nach deren Überschreiten eine Überlastsituation festgestellt wird, entsprechend anzupassen, also beispielsweise die Temperaturgrenzen, ab deren Erreichen auf eine Überlastsituation geschlossen wird, niedriger anzusetzen als die Temperaturgrenzen, die für eine Überlastsituation gelten würden, wenn nach deren Erreichen sofort mit einer Unterbrechung der Stromzufuhr zum Aktuator reagiert werden würde.

Das erfindungsgemäße Verfahren ermöglicht es, einen Referenzanschlag, an den der Aktuator zur Bestimmung eines Referenzpunktes im Rahmen einer Inkrementalwegmessung verfahren wird, schwächer auszugestalten als dies der Fall wäre, wenn der Aktuator sofort und unmittelbar nach dem Erkennen einer Überlastsituation stromlos geschalten werden würde. Mit dem erfindungsgemäßen Verfahren wird nämlich die kinetische Energie des Aktuators am Anschlag verringert und darüber hinaus wird die Reproduzierbarkeit der Referenzsuche vergrößert, da stets mit der gleichen Kraft am Anschlag referenziert werden kann.

Die Erfindung schafft nun auch ein Verfahren der Steuerung eines elektromotorischen Aktuators eines Getriebes - bei dem es sich auch um ein Teilgetriebe handeln kann - im Triebstrang eines Fahrzeugs bei Überlast des Aktuators und/oder einer Aktuatorsteuerung, wobei bei Überlast die Stromzufuhr des Aktuators unterbrochen wird und vor der Unterbrechung der Stromzufuhr ein Schaltelement des Getriebes in eine Neutralgasse verfahren wird. Damit wird erreicht, dass vor der Abschaltung des Aktuators ein sicherer Zustand herbeigeführt wird. So kann nun nach der Erfindung nach der Erkennung der Überlastsituation der aktive Schaltvorgang abgebrochen werden und stattdessen das Schaltelement in der Form beispielsweise eines Schaltfingers mit Schaltschiene in eine Neutralstellung gebracht werden, sodass in diesem Teilgetriebe der Neutralgang eingelegt ist und der Schaltfinger in der definierten Neutralgasse positioniert ist. Tritt die Überlastsituation des Aktuators nach dem Einlegen eines Ganges auf, z. B. während eines Tasten eines Referenzpunktes, so kann eine sichere Situation darin bestehen, den eingelegten Gang eingelegt zu belassen und den Schaltfinger in Gangruhelage oder in der Neutralgasse zu positionieren und den Aktuator danach stromlos zu schalten.

Nach einer Weiterbildung des erfindungsgemäßen Verfahrens ist es auch vorgesehen, dass der Aktuator vor der Unterbrechung der Stromzufuhr bei eingelegter Gangstufe zum Auslegen der Gangstufe mittels eines Verfahrvorgangs des Schaltelements betätigt wird. Damit kann neben der Vorgehensweise, die eingelegte Gangstufe eingelegt zu belassen, alternativ auch bei dem entsprechenden Teilgetriebe oder auch bei allen Teilgetrieben zunächst noch der Neutralgang eingelegt werden und erst danach die Stromzufuhr zum Aktuator unterbrochen werden.

Da es nach der Unterbrechung der Stromzufuhr von Bedeutung ist, die Position eines Schaltelementes für die Wiederaufnahme des Verfahrvorgangs des Schaltelements zu kennen, ist es nach der Erfindung auch vorgesehen, dass das Schaltelement vor der Unterbrechung der Stromzufuhr an einem Referenzpunkt verfahren wird, damit nach dem Wiedereinschalten des Aktuators nach einem etwaigen Abkühlvorgang eine definierte Position des Schaltelement bekannt ist. Dieses Referenzieren kann dabei in vorteilhafter Weise positionsgeregelt durchgeführt werden und unter Begrenzung von Spannung und/oder Strom, um den Elektromotor des Aktuators nicht durch das Referenzieren weiter zu erwärmen.

Ganz allgemein ist es nach der vorliegenden Erfindung vorgesehen, dass der Aktuator mit auf vorbestimmte Schwellenwerte begrenzten Werten von Strom und/oder Spannung verfahren wird derart, dass die Temperatur des Aktuators und/oder der Aktuatorsteuerung im Wesentlichen gleich bleibt oder abnimmt. Dies gilt sowohl für einen eine automatisiert betätigte Kupplung im Triebstrang ansteuernden Aktuator als auch für einen ein Getriebe oder ein Teilgetriebe ansteuernden Aktuator.

Sobald eine Überlastsituation erkannt ist, ist es auch bei dem ein Getriebe betätigenden elektromotorischen Aktuator vorgesehen, dass der Aktuator zeitlich unmittelbar nach der Feststellung einer Überlast zum Verfahren des Schaltelements betätigt wird. Auch der Aktuator für das Getriebe kann positionsgeregelt und/oder kraftgesteuert und/oder spannungsgesteuert verfahren werden und ein möglicher Betriebsparameter zur Feststellung einer Überlastsituation des Aktuators besteht auch hier in der Temperatur, die mit einer Referenztemperatur verglichen wird und nach dem Überschreiten der aktuellen Aktuatortemperatur und/oder Aktuatorsteurungstemperatur des Referenz- und/oder Schwellenwerts eine Überlastsituation festgestellt wird, woraufhin dann vor der Unterbrechung der Stromzufuhr ein Schaltelement des Getriebes in eine Neutralgasse verfahren wird.

Die Erfindung schafft daher ein Verfahren, dass bei Überlastsituation eines Kupplungsaktuators bzw. eines Getriebeaktuators vor dem Abschalten der Elektromotoren zunächst noch eine sichere Situation herstellt und erst danach die Motoren abgeschaltet werden.

Hinsichtlich vorstehend im Einzelnen nicht näher erläuterter Merkmale der Erfindung wird im Übrigen ausdrücklich auf die Ansprüche verwiesen.

## Patentansprüche

1. Verfahren der Steuerung eines elektromotorischen Aktuators einer selbstöffnenden Kupplung im Triebstrang eines Fahrzeugs bei Überlast des Aktuators und/oder einer Aktuatorsteuerung, wobei bei Überlast die Stromzufuhr zum Aktuator unterbrochen wird, **dadurch gekennzeichnet, dass** der Aktuator vor der Unterbrechung der Stromzufuhr entlang des Aktuatorverfahrwegs zum Erreichen eines Verfahrwegsschwellenwerts betätigt wird, ab dem er stromlos geschalten von einer Rückstellkraft der Kupplung zum Erreichen eines Verfahrwegsendwerts beaufschlagt wird, an dem er wieder zum Schließen der Kupplung betätigbar ist.

2. Verfahren nach Anspruch 1, **dadurch gekennzeichnet, dass** der Aktuator mit auf vorbestimmte Schwellenwerte begrenzten Werten von Strom und/oder Spannung zum Verfahrwegsschwellenwert verfahren wird derart, dass die Temperatur des Aktuators und/oder der Aktuatorsteuerung im Wesentlichen gleich bleibt oder abnimmt.

3. Verfahren nach Anspruch 1 oder 2, **dadurch gekennzeichnet, dass** der Aktuator zeitlich unmittelbar nach der Feststellung einer Überlast zum Erreichen des Verfahrwegsschwellenwerts betätigt wird.

4. Verfahren nach einem der vorstehenden Ansprüche, **dadurch gekennzeichnet, dass** der Verfahrwegsschwellenwert empirisch oder mittels Simulation festgestellt wird derart, dass die Rückstellkraft den Aktuator beschädigungsfrei zum Erreichen eines Anschlags betätigt.

5. Verfahren nach einem der vorstehenden Ansprüche, **dadurch gekennzeichnet, dass** der Verfahrwegsschwellenwert empirisch festgestellt wird derart, dass die Rückstellkraft den Aktuator derart beaufschlagt, dass der Aktuator eine Endstellung vor Erreichen eines Anschlags einnimmt.

6. Verfahren nach einem der vorstehenden Ansprüche, **dadurch gekennzeichnet, dass** der Aktuator positionsgeregelt und/oder kraftgesteuert und/oder spannungsgesteuert und/oder zeitgesteuert und/oder geschwindigkeitsgeregelt zum Verfahrwegsschwellenwert verfahren wird.

7. Verfahren nach einem der vorstehenden Ansprüche, **dadurch gekennzeichnet, dass** zur Feststellung der Überlast mindestens ein Betriebsparameter des Aktuators und/oder der Aktuatorsteuerung, insbesondere die Temperatur, mit einem Schwellenwert des Betriebsparameters verglichen wird und nach einem Überschreiten des Schwellenwerts Überlast festgestellt wird.

8. Verfahren der Steuerung eines elektromotorischen Aktuators eines Getriebes im Triebstrang eines Fahrzeugs bei Überlast des Aktuators und/oder einer Aktuatorsteuerung, wobei bei Überlast die Stromzufuhr zum Aktuator unterbrochen wird, **dadurch gekennzeichnet, dass** vor der Unterbrechung der Stromzufuhr ein Schaltelement des Getriebes in eine Neutralgasse verfahren wird.

9. Verfahren nach Anspruch 8, **dadurch gekennzeichnet, dass** der Aktuator vor der Unterbrechung der Stromzufuhr bei eingelegter Gangstufe zum Auslegen der Gangstufe mittels eines Verfahrvorgangs des Schaltelements betätigt wird.

10. Verfahren nach Anspruch 8 oder 9, **dadurch gekennzeichnet, dass** das Schaltelement vor der Unterbrechung der Stromzufuhr an einen Referenzpunkt verfahren wird.

11. Verfahren nach einem der Ansprüche 8 bis 10, **dadurch gekennzeichnet, dass** der Aktuator mit auf vorbestimmte Schwellenwerte begrenzten Werten von Strom und/oder Spannung verfahren wird derart, dass die Temperatur des Aktuators und/oder der Aktuatorsteuerung im Wesentlichen gleich bleibt oder abnimmt.

12. Verfahren nach einem der Ansprüche 8 bis 11, **dadurch gekennzeichnet, dass** der Aktuator zeitlich unmittelbar nach der Feststellung einer Überlast zum Verfahren des Schaltelements betätigt wird.

13. Verfahren nach einem der Ansprüche 8 bis 12, **dadurch gekennzeichnet, dass** der Aktuator positionsgeregelt und/oder kraftgesteuert und/oder spannungsgesteuert und/oder zeitgesteuert und/oder geschwindigkeitsgeregelt verfahren wird.

14. Verfahren nach einem der Ansprüche 8 bis 13, **dadurch gekennzeichnet, dass** zur Feststellung der Überlast mindestens ein Betriebsparameter des Aktuators und/oder der Aktuatorsteuerung, insbesondere die Temperatur, mit einem Schwellenwert des Betriebsparameters verglichen wird und nach einem Überschreiten des Schwellenwerts Überlast festgestellt wird.
